(19) Europäisches Patentamt

European Patent Office

Office européen des brevets

(11) **EP 3 861 076 B1**

(12) **EUROPEAN PATENT SPECIFICATION**

(45) Date of publication and mention of the grant of the patent:
**27.05.2026 Bulletin 2026/22**

(21) Application number: **19868660.2**

(22) Date of filing: **03.10.2019**

(51) International Patent Classification (IPC):
**C09D 5/33** (2006.01)      **C09D 7/61** (2018.01)
**B05D 1/02** (2006.01)      **B05D 5/06** (2006.01)
**C08K 3/24** (2006.01)

(52) Cooperative Patent Classification (CPC):
**C09D 5/004; B05D 1/28; B05D 5/06; C08K 3/24;**
**C08K 3/36; C08K 2003/2206; C08K 2003/222;**
**C08K 2003/2227; C08K 2003/265;**
**C08K 2003/3036; C08K 2003/3045; C08K 2201/019**

(86) International application number:
**PCT/US2019/054566**

(87) International publication number:
**WO 2020/072818 (09.04.2020 Gazette 2020/15)**

(54) **METAL-FREE SOLAR-REFLECTIVE INFRARED-EMISSIVE PAINTS AND METHOD OF PRODUCING FILMS OF THE SAME**

METALLFREIE, SONNENLICHT REFLEKTIERENDE INFRAROTEMITTIERENDE FARBEN UND VERFAHREN ZUR HERSTELLUNG VON FILMEN AUS DIESEN FARBEN

PEINTURES À ÉMISSION INFRAROUGE ET RÉFLEXION SOLAIRE SANS MÉTAL ET PROCÉDÉ DE PRODUCTION DE FILMES DE CES PEINTURES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2018 US 201862740552 P**
**13.11.2018 US 201862760281 P**

(43) Date of publication of application:
**11.08.2021 Bulletin 2021/32**

(73) Proprietor: **Purdue Research Foundation Indiana 47906 (US)**

(72) Inventors:
• **RUAN, Xiulin**
**Lafayette, Indiana 47906 (US)**
• **LI, Xiangyu**
**Lafayette, Indiana 47906 (US)**
• **HUANG, Zhifeng**
**Wuhan, Hebei 430072 (CN)**
• **PEOPLES, Joseph Arthur**
**Lafayette, Indiana 47906 (US)**

(74) Representative: **Murgitroyd & Company**
**165-169 Scotland Street**
**Glasgow G5 8PL (GB)**

(56) References cited:
**EP-A2- 0 454 349          WO-A1-95/10569**
**WO-A2-2008/147972      WO-A2-2011/045740**
**US-A1- 2017 073 530      US-A1- 2018 180 331**
**US-A1- 2018 244 928**

• **ATIGANYANUN SARUN ET AL: "Effective Radiative Cooling by Paint-Format Microsphere-Based Photonic Random Media", vol. 5, no. 4, 18 April 2018 (2018-04-18), pages 1181 - 1187, XP055899705, ISSN: 2330-4022, Retrieved from the Internet <URL:https://pubs.acs.org/doi/pdf/10.1021/acsphotonics.7b01492> [retrieved on 20220310], DOI: 10.1021/acsphotonics.7b01492**

**Description**

CROSS REFERENCE TO RELATED APPLICATIONS

This application claims the benefit of U.S. Provisional Application No. 62/740,552, filed October 3, 2018, and U.S. Provisional Application No. 62/760,281, filed November 13, 2018.

BACKGROUND OF THE INVENTION

The present invention generally relates to methods and materials for dissipating thermal energy. The invention particularly relates metal-free compositions for solar-reflective infrared-emissive coatings, including radiative cooling paints.

Cooling objects subjected to direct sunlight is a challenging but essential need for buildings, automobiles, and equipment. Air conditioning is a widely-used active cooling method, but consumes large amounts of electrical power. In addition, active cooling is not possible or practical for certain equipment, leading to overheating problems and deteriorated performance. Radiative passive cooling techniques have been proposed that utilize high emission through a "sky window" to transmit thermal energy to the deep sky without relying on electrical power. As known in the art and as used herein, the term "sky window" refers to a transparent spectral window of the atmosphere, ranging from 8 micrometers to about 13 micrometers, where emissions can be transmitted directly from a surface on the Earth, through the Earth's atmosphere, to the deep space, which acts as a 4K heat sink. Existing passive cooling techniques utilizing the sky window typically use an expensive multilayer structure that includes a metallic layer to promote high solar reflection. However, metallic components can interfere with high frequency signals, cause malfunctions for outdoor equipment in communication networks, and block cell phone signal reception in buildings. Metallic components also add cost to products and inconvenience to their application. As such, it would be desirable and in some cases is necessary to develop a single layer paint without a metallic component for use in some applications of radiative cooling technique.

US 2018/244928 A1 describes a radiative cooling paint comprising barium sulfate particles and a polymeric binder matrix.

BRIEF DESCRIPTION OF THE INVENTION

The present invention relates to a solar-reflective infrared-emissive film as defined in claim 1. Particular embodiments are defined in the dependent claims. A further aspect of the present invention relates to a method of producing the solar-reflective infrared-emissive film, as defined in claim 8.

The present disclosure provides metal-free compositions for solar-reflective infrared-emissive coatings (hereinafter referred to as paint(s) for convenience) and methods of producing the same. The paints are suitable for reducing the temperatures of objects below ambient temperatures during nighttime (between sunset and sunrise) and part or full daytime (between sunrise and sunset) when such objects are subjected to direct sunlight.

According to one aspect of the disclosure, a solar-reflective infrared-emissive paint includes a particle-polymer composite containing particles in a polymeric matrix, wherein the particles are nanoparticles or microparticles, the paint does not contain a metallic component, and the paint exhibits high reflectance for the solar spectrum wavelengths of 0.3 to 3 micrometers and high emissivity for wavelengths of 8 to 13 micrometers.

According to another aspect of the disclosure, a solar-reflective infrared-emissive paint includes nanoparticles that are free of a polymeric matrix, wherein the paint does not contain a metallic component and the paint exhibits high reflectance for the solar spectrum wavelengths of 0.3 to 3 micrometers and high emissivity for wavelengths of 8 to 13 micrometers.

Technical aspects of solar-reflective infrared-emissive paints as described above preferably include the capability of achieving below ambient temperatures for objects during the nighttime and part or full daytime when the objects are subjected to direct sunlight, and achieving such capabilities without the paints requiring a metallic component that would interfere with high frequency signals, cause malfunctions for outdoor equipment in communication networks, block cell phone signal reception in buildings, add cost to a product and inconvenience to its application, etc.

Other aspects and advantages of this disclosure will be appreciated from the following detailed description.

BRIEF DESCRIPTION OF THE DRAWINGS

FIG. 1A contains images showing an experimental $TiO_2$ nanoparticle-containing acrylic composite paint ("$TiO_2$"), an experimental $CaCO_3$ microparticle-containing composite paint ("$CaCO_3$"), an experimental $BaSO_4$ nanoparticle-

containing acrylic composite paint ("$BaSO_4$"), a commercial white paint ("Commercial"), and a carbon black paint ("Black") evaluated as radiative cooling paints.

FIGS. 1B and 1C are, respectively, scanning electron microscope (SEM) images of the experimental $CaCO_3$ microparticle-containing composite paint and the experimental $BaSO_4$ nanoparticle-containing acrylic composite paint of FIG. 1A. Scale bars of FIGS. 1B and 1C are 10 $\mu$m and 5 $\mu$m, respectively.

FIG. 2A schematically illustrates how solar reflectance and sky window emission can be achieved simultaneously within a single layer of a composite paint containing particles in a polymer matrix.

FIG. 2B is a plot showing the emissivity of different radiative cooling paints characterized from 0.25 to 20 $\mu$m along with the AM1.5 solar spectrum and atmospheric transmittance.

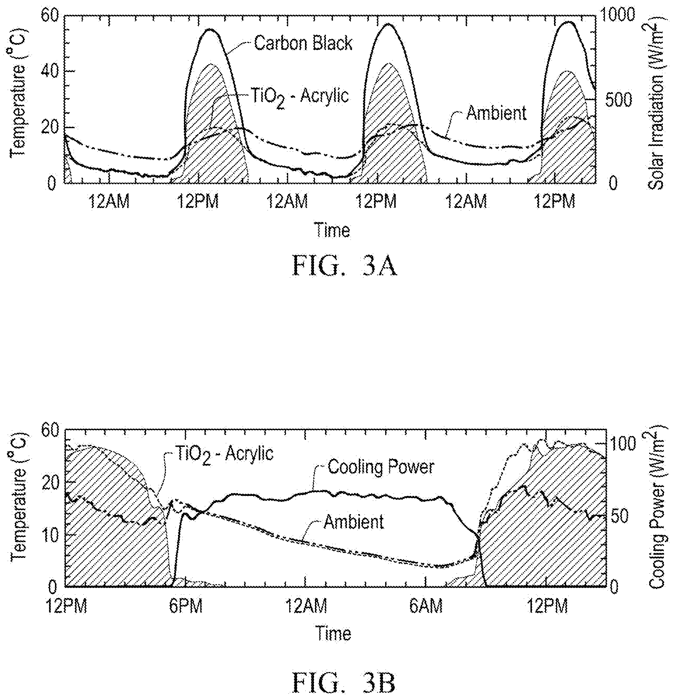

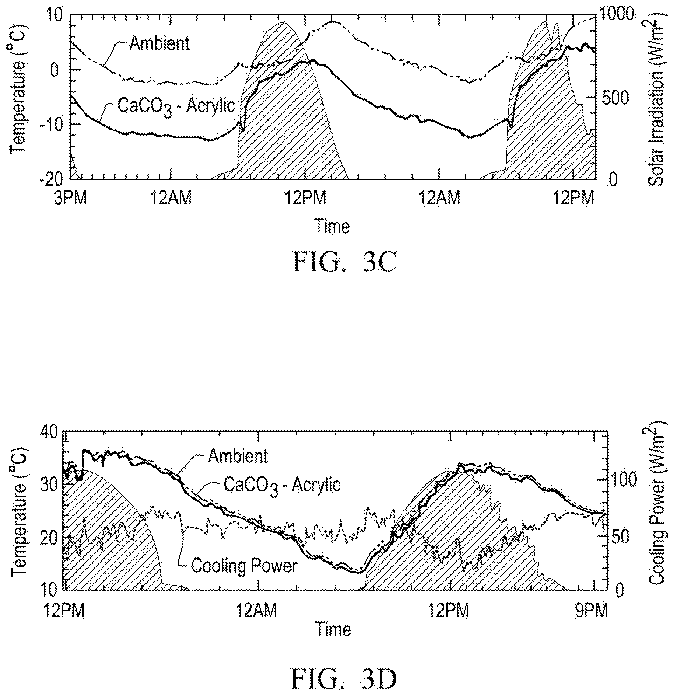

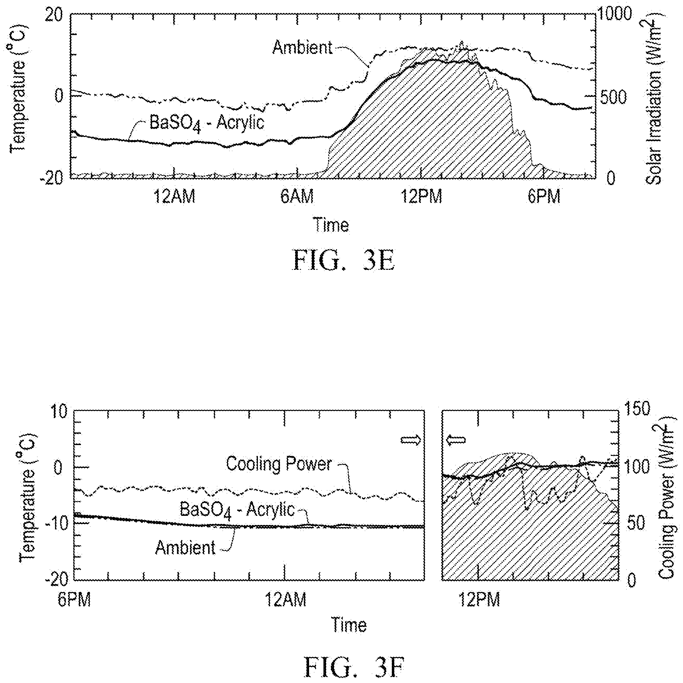

FIGS. 3A, 3C, and 3E plot outdoor temperature measurements for an experimental $TiO_2$ nanoparticle-containing acrylic composite paint ("$TiO_2$ Acrylic"), an experimental $CaCO_3$ microparticle-containing composite paint ("$CaCO_3$ Acrylic"), and an experimental $BaSO_4$ nanoparticle-containing acrylic composite paint ("$BaSO_4$ Acrylic"), respectively, over periods of more than one day. FIGS. 3B, 3D, and 3F plot direct measurements of the cooling power for the $TiO_2$, $CaCO_3$, and $BaSO_4$ Acrylic paints, respectively, using a feedback heater. Shaded regions within the graphs represent solar irradiation intensity.

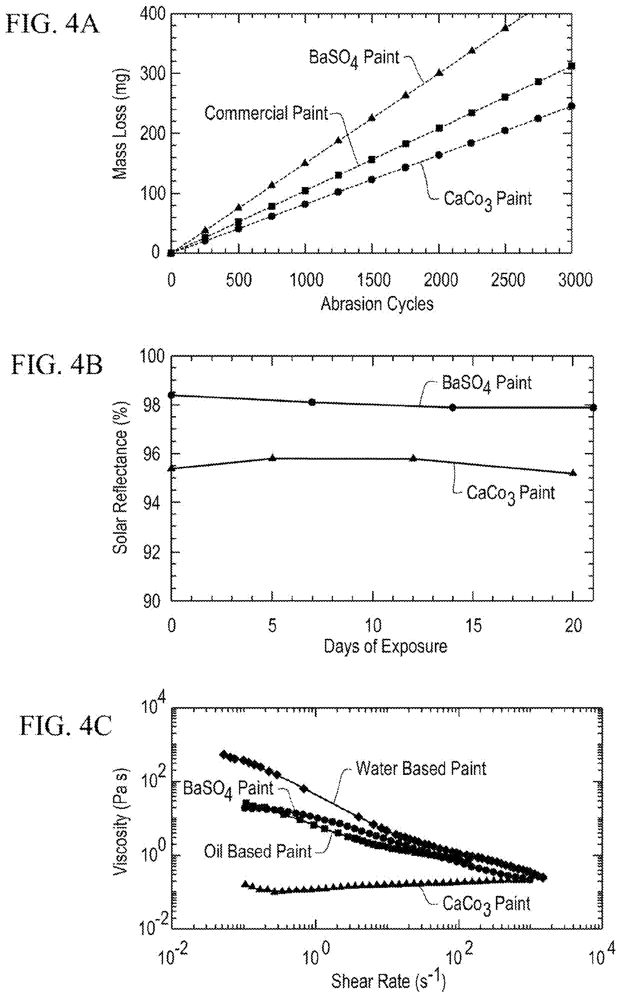

FIGS. 4A is a graph plotting mass loss as a function of cycle number of abrasion tests performed on samples of an experimental $CaCO_3$ microparticle-containing composite paint ("$CaCO_3$ Paint") and an experimental $BaSO_4$ nanoparticle-containing acrylic composite paint ("$BaSO_4$ Paint") relative to the commercial white paint ("Commercial Paint"). The slopes were used to calculate wear indices. Both experimental paints showed comparable abrasion resistance to the commercial paint. FIG. 4B is a graph evidencing that solar reflectance remained the same during a 3-week outdoor weathering test performed on the experimental paints, and FIG. 4C is a graph plotting the viscosities of the experimental paints relative to the commercial paint.

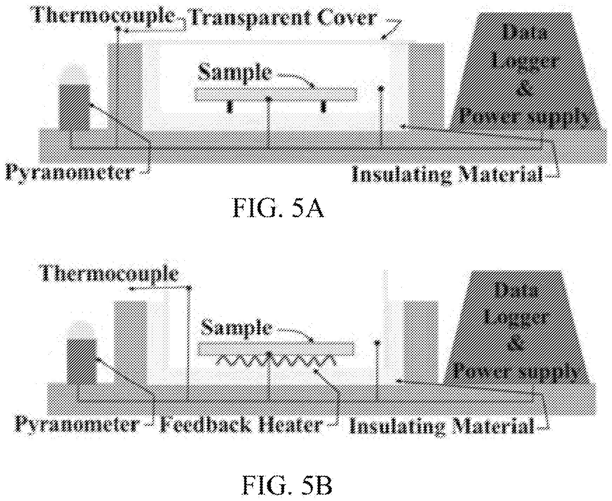

FIGS. 5A and 5B schematically represent two on-site cooling setups for cooling performance characterization used in investigations leading to the present invention. In FIG. 5A, the temperatures of experimental radiative cooling paint samples and the ambient temperature were recorded and compared in the setup without a feedback heater. A lower paint temperature indicates a cooling effect, or otherwise a heating effect. In FIG. 5B, the paint temperature and the ambient temperature were maintained the same by a feedback heater. As the conduction and convection were negligible without a temperature difference, the power consumption of the feedback heater represented the cooling power of the experimental paints under direct solar irradiation.

FIG. 6 schematically represents the reflectance of a radiative cooling paint.

FIG. 7 contains a plot representing a comparison between radiative cooling paint samples having nanoparticles of a single size (D=100 nm), five random sizes (D=100±50 nm), and a $TiO_2$ nanoparticle-containing acrylic composite paint ("Experimental") having a thickness of 2 mm.

FIG. 8 contains plots representing an effect of particle size on light scattering ($\lambda$ = 412 nm).

FIG. 9 is a plot representing an effect of particle size on absorption.

FIG. 10 includes plots representing modeling data for multiple particle sizes.

FIG. 11 is a graph plotting spectral solar reflectance and transmittance of thin coatings of an 8% $TiO_2$ nanoparticle-containing acrylic composite paint at different thicknesses.

FIG. 12 is a graph plotting solar reflectance of a $TiO_2$ nanoparticle-containing acrylic composite paint as a function of coating thickness and volume concentration of the $TiO_2$ nanoparticles.

FIG. 13 is a graph plotting solar reflectance of a $CaCO_3$ microparticle-containing composite paint and a $BaSO_4$ nanoparticle-containing acrylic composite paint at different coating thicknesses.

FIG. 14 is a graph plotting sky window emissivity of a $CaCO_3$ microparticle-containing composite paint and a $BaSO_4$ nanoparticle-containing acrylic composite paint at different coating thicknesses and in comparison to pure acrylic thin films.

FIG. 15 is a graph plotting solar reflectance of $BaSO_4$ films of different thicknesses on different substrates.

FIG. 16 is a graph plotting cooling power of $BaSO_4$ films on different substrates during the night time.

## DETAILED DESCRIPTION OF THE INVENTION

The present disclosure describes metal-free compositions that are suitable for use as radiative cooling paints (coatings) capable of reducing the temperatures of objects below ambient temperatures, preferably between sunset and sunrise (nighttime) and part or full daytime (between sunrise and sunset) when such objects are subjected to direct sunlight. The radiative cooling paints are solar-reflective infrared-emissive coatings that include, for example, a composite containing nanoparticles or microparticles in a polymeric matrix. Notably, the paints do not contain a metallic component and exhibit high emissivity for wavelengths of about 8 to about 13 micrometers.

As used herein, terms such as "metal-free" and statements that the radiative cooling paints do not contain a metallic layer or metallic constituent refer to compositions in which any metal elements present are part of a nonmetallic (e.g., ceramic) compound and/or are present in such incidental amounts as to not interfere with high frequency signals, wireless communication networks, cell phone signal reception, etc., that might be transmitted through the paints.

As nonlimiting examples, the radiative cooling paints can be utilized with buildings, automobiles, and outdoor equipment whose use or operation would benefit from achieving lower surface temperatures, for example, lower utility costs attributable to air conditioning, while avoiding drawbacks associated with radiative cooling materials that contain metallic components, for example, interference with telecom networking, cell phone signal reception, etc. Furthermore, the radiative cooling paints are economical for mass production, compatible with current commercial paint fabrication processes, and can utilize fabrication techniques adapted for scalable production.

Investigations leading to the present invention indicated that the certain experimental radiative cooling paints provided strikingly high cooling performance under peak sunlight. Evaluated microparticle and nanoparticle materials were selected and produced at least in part based on the following criteria. Materials were selected for their large intrinsic band gaps to minimize absorption in the ultra-violet (UV) spectrum, particle sizes were selected to strongly reflect sunlight (solar spectrum wavelengths of 0.3 to 3 micrometers) except the mid-infrared spectrum, and vibrational resonances of the particle or matrix materials were selected to provide strong emission in the sky window.

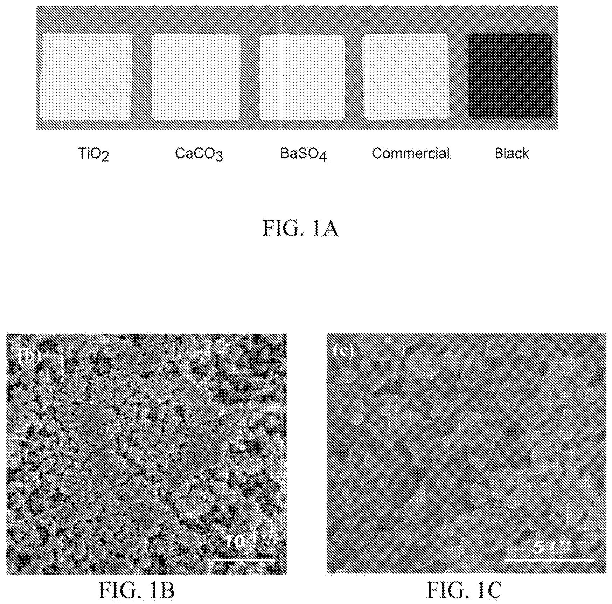

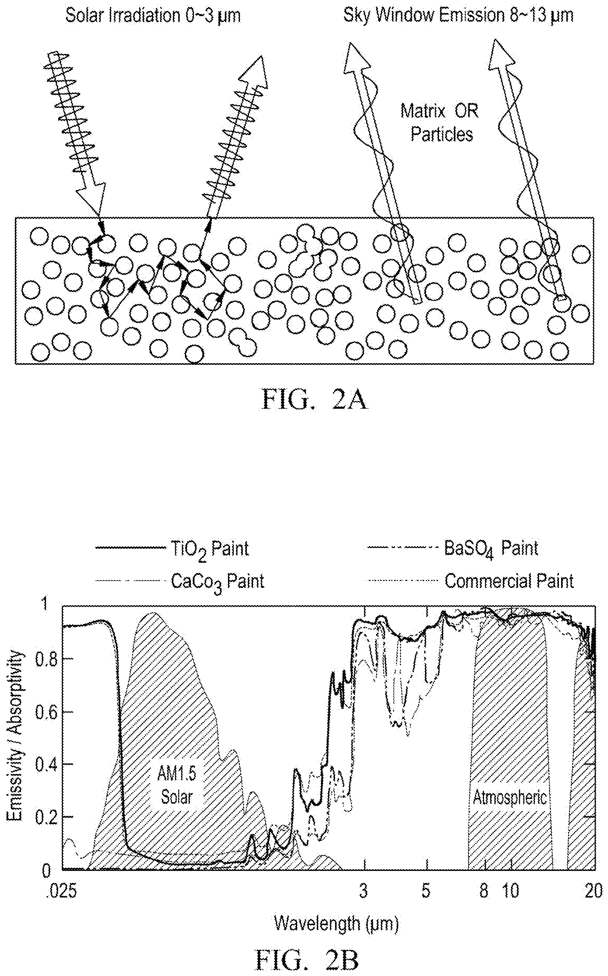

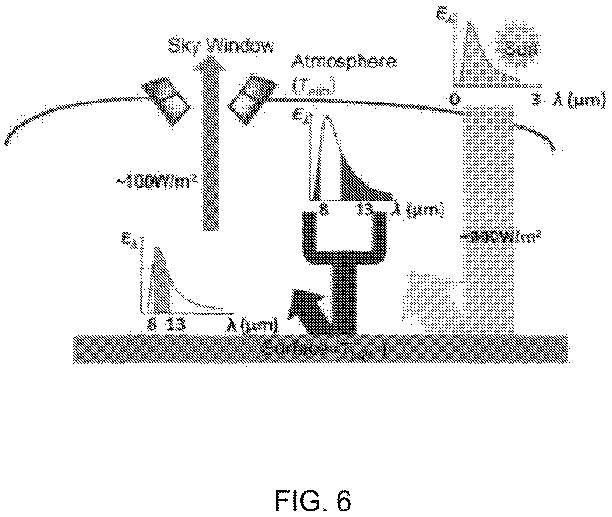

FIG. 1A contains images showing a carbon black paint, an experimental $TiO_2$ (titania) nanoparticle-containing acrylic composite paint ("$TiO_2$"), an experimental $CaCO_3$ (calcium carbonate) microparticle-containing composite paint ("$CaCO_3$"), an experimental $BaSO_4$ (barium sulfate) nanoparticle-containing acrylic composite paint ("$BaSO_4$"), and a commercial white paint ("Commercial") evaluated as radiative cooling paints. FIGS. 1B and 1C show, respectively, scanning electron microscope (SEM) images of the experimental $CaCO_3$ microparticle-containing composite paint and the experimental $BaSO_4$ nanoparticle-containing acrylic composite paint of FIG. 1A. The $BaSO_4$ nanoparticle-containing acrylic composite paint exhibited an ultra-high solar reflectance of up to 98.1% for the solar spectrum (wavelengths of 0.3 to 3 micrometers), significantly higher than tested conventional coatings, and a high sky window emissivity of up to 0.95. The $CaCO_3$ microparticle-containing composite paint also exhibited desirable solar reflectance for the solar spectrum (wavelengths of 0.3 to 3 micrometers) and sky window emissivity of up to 95.5% and 0.94, respectively. FIG. 2A schematically illustrates how solar reflectance and sky window emission can be achieved simultaneously within a particle-containing composite paint consisting essentially of nanoparticles or microparticles in a matrix, as a result of the nanoparticles or microparticles being configured to maximize solar reflection at and below wavelengths of 3 $\mu$m, and the nanoparticles/microparticles and/or matrix contributing high emissivity at wavelengths of 8 $\mu$m to 13 $\mu$m. As used herein, the term "high emissivity" refers to an emissivity of 0.9 or greater. As a result, when the composite paint is exposed to direct solar irradiation, solar reflectance at and below wavelengths of 3 $\mu$m is mainly contributed by the nanoparticles/microparticles and sky window emission at wavelengths of 8 $\mu$m to 13 $\mu$m are contributed by the nanoparticles/microparticles and matrix. FIG. 6 schematically represents reflectance characteristics of radiative cooling paints investigated as described herein.

Nonlimiting embodiments of the invention will now be described in reference to experimental investigations leading up to the invention.

Initial tests were performed with a carbon black paint (labeled as "Black" in FIG. 1A) and an experimental composite paint not according to the present invention, consisting essentially of $TiO_2$ nanoparticles in an acrylic matrix (also referred to herein as a $TiO_2$ composite paint and labeled as "$TiO_2$" in FIG. 1A). The carbon black paint was prepared by spray-coating and air drying a carbon black paint on a glass substrate. The $TiO_2$ composite paint consisted of 8% by volume of 500 nm $TiO_2$ particles (nanoparticles) in an acrylic matrix. Elvacite® 2028, commercially available from Lucite International, was used as the acrylic matrix material due to its low viscosity. An average particle size of 500 nm was used to promote high reflectance both in the visible and near infrared (NIR) range of the solar irradiation spectrum. An acrylic material was chosen for the matrix on the basis of being transparent in the visible range to provide high emissivity in the sky window, as $TiO_2$ lacks optical phonon resonance peaks in the mid-infrared range. The $TiO_2$ nanoparticles were first mixed with butanone, followed by ten minutes of sonication to reduce particle agglomeration. The acrylic was slowly added to this mixture, which was then degassed in a vacuum chamber to remove air bubbles introduced during mixing and ultrasonication. After pouring into a mold, the mixture was allowed to dry until all solvent had evaporated. The resulting composite paint released from the mold had a thickness of about 400 $\mu$m.

A UV-VIS-NIR spectrometer and a FTIR spectrometer with integrating spheres were used for reflection and emissivity measurements over wavelengths of 250 nm to 20 $\mu$m. The emissivities of the $TiO_2$ composite paint ("$TiO_2$ Paint") and the commercial white paint ("Commercial Paint") are shown in FIG. 2B. As represented, the $TiO_2$ composite paint showed a high emissivity of 0.93 in the sky window. However, the electron band gap of $TiO_2$ is about 3.2 eV, and therefore it strongly absorbs (about 88%) in the ultra-violet (UV) range. The $TiO_2$ composite paint showed a reflectance of 94.7% in the visible (VIS) band and 91.6% in near infrared (NIR) range. The overall solar reflectance of the $TiO_2$ composite paint was about 89.5$\pm$0.5%. The uncertainty was valued based on results of five different samples made in separate batches.

Outdoor temperature measurements were conducted with the carbon black and $TiO_2$ composite paints over a three-day period, as shown in FIG. 3A. The relative humidity was about 70% and the peak solar irradiation was around 800

$W/m^2$ at about 2:00 p.m. during the days. During the nights, both samples showed nighttime cooling of approximately 7°C below ambient temperature due to their high emissivity in the sky window. The TiO2 composite paint showed partial daytime cooling below ambient temperature except from 11:20 a.m. to 4:00 p.m. when the solar irradiation became higher than 600 $W/m^2$.

In another on-site experiment, a feedback heater was used to match the temperature of the $TiO_2$ composite paint to the ambient and thereby directly measure the cooling power of the sample as represented in FIG. 3B. The shaded region represents the solar irradiation, and the black curve representing the cooling power of the $TiO_2$ composite paint shows a net radiative cooling power of about 63 $W/m^2$ during the nights.

Because of the absorption of $TiO_2$ in the UV range due to its 3.2 eV electron bandgap, it would be difficult to further increase solar reflection to achieve full daytime cooling. Therefore alternative materials with higher electron bandgaps were investigated, including the aforementioned $CaCO_3$ (calcium carbonate) and $BaSO_4$ (barium sulfate) materials, both with bandgaps of about 5 eV. Similar to $TiO_2$, $CaCO_3$ does not have phonon-polariton resonances in the sky window. Therefore, a matrix that emits in the sky window, such as acrylic, is desirable to provide cooling power. While $BaSO_4$ can also be combined with a matrix that emits in the sky window, $BaSO_4$ has intrinsic emission peaks in the sky window. Therefore, appropriately engineering the particle size enables a matrix-free film of $BaSO_4$ nanoparticles to also function both as a sky window emitter and a solar reflector.

A composite paint not according to the present invention, consisting essentially of $CaCO_3$ microparticles in an acrylic matrix (also referred to herein as a $CaCO_3$ composite paint and labeled as "$CaCO_3$" in FIG. 1A) was prepared to contain 60% volume percent of 1.9 $\mu m$ $CaCO_3$ microparticles as a filler material in the polymer matrix. The $CaCO_3$ composite paint was fabricated in a similar fashion to the $TiO_2$ composite paint as described above and had a thickness of about 400 $\mu m$. Porosity was introduced due to the high volume concentration to ensure minimal transmission of incoming sunlight, as the refractive index of $CaCO_3$ is closer to acrylic than that of $TiO_2$. The emissivity of the $CaCO_3$ composite paint ("$CaCO_3$ Paint") is also shown in FIG. 2B. While maintaining a high emissivity in the sky window similar to the $TiO_2$ composite paint, the $CaCO_3$ composite paint's absorptivity in the UV and NIR regions were much lower. The solar reflectance of the $CaCO_3$ composite paint reached 95.5%. Thinner films of such composite paints with a thickness of 50, 60, and 100 $\mu m$ were observed to still provide high solar reflectance of 92.1%, 93.4%, and 95.0% respectively. Outdoor temperature measurements of the $CaCO_3$ composite paint showed full daytime cooling as represented in FIG. 3C, where the sample stayed 10°C below the ambient temperature at night, and at least 1.7°C below the ambient temperature at a peak solar irradiation around 950 $W/m^2$. A feedback heater experiment represented in FIG. 3D showed an average cooling power of 56 $W/m^2$ during nights and 37 $W/m^2$ around noon (between 10:00 a.m. and 2:00 p.m.). The cooling power remained above 20 $W/m^2$ at the peak solar irradiation of 1070 $W/m^2$, confirming that full daytime cooling below ambient temperature is achieved.

A composite paint not according to the present invention, consisting essentially of $BaSO_4$ nanoparticles in an acrylic matrix (also referred to herein as a $BaSO_4$ composite paint and labeled as "$BaSO_4$" in FIG. 1A) was prepared to contain 60% volume percent of 500 nm $BaSO_4$ nanoparticles in the matrix. The $BaSO_4$ composite paint exhibited similar properties to the conventional "Commercial" paint seen in FIG. 1A. The thickness of the $BaSO_4$ composite paint was about 400 $\mu m$ to eliminate any effect of substrates. As can be seen from an SEM image of the paint in FIG. 1C, the $BaSO_4$ nanoparticles were bonded with the acrylic matrix. The $BaSO_4$ composite paint exhibited a high sky window emissivity (0.95) as well as a very high solar reflectance (98.1%) among the paints reported in FIG. 2B. The high solar reflectance was contributed by the low solar absorptance of $BaSO_4$ and the high filler concentration to ensure high scattering within the paint. FIG. 3E shows a temperature measurement of the $BaSO_4$ composite paint, which stayed below ambient temperature for about 24 hours (during which time a humidity of about 50% occurred at noon). FIG. 3F includes a direct measurement of the cooling power during which time a humidity of about 60% occurred at noon. Counterintuitively, the cooling power during the noon hours, despite the solar absorption, was similar to or higher than that from the night hours. This was concluded to be due to the thermal radiative power being proportional to the fourth power of the surface temperature. Thus, simply reporting the cooling power without considering the surface temperature can be a misleading measure of the cooling performance. In this measurement, the cooling power exceeded 80 $W/m^2$ through a 24-hour period with the surface temperature as low as -10°C, equivalent to a cooling power of 113 $W/m^2$ at 15°C.

Due to a phonon polariton resonance at 9 $\mu m$ in the sky window, it was theorized that engineering the particle size can enable a single layer of $BaSO_4$ particle film to function both as a sky window emitter and a solar reflector. For the investigation, a coating according to the present invention, formed entirely by a single layer or film of $BaSO_4$ nanoparticles was produced. This coating (also referred to herein as a $BaSO_4$ film) was formed by applying a mixture of 500 nm $BaSO_4$ nanoparticles, deionized water, and ethanol as a coating on a glass substrate and allowing the mixture to fully dry. The resulting $BaSO_4$ film (without a polymer matrix material) had a thickness of about 150 $\mu m$ thickness and provided a higher refractive index contrast between $BaSO_4$ and air, leading to a similar solar reflectance achieved with a much thinner film. The average particle size was chosen as 500 nm to reflect both the visible and near infrared range of solar irradiation. $BaSO_4$ has a phonon polariton resonance at 9 $\mu m$ which provides absorption peaks in the sky window. Hence, $BaSO_4$ does not rely on a polymer matrix to emit in the sky window. During the tests, the $BaSO_4$ film exhibited a solar reflectance of 97% and an emissivity of 0.93 in the sky window. The $BaSO_4$ film achieved full daytime cooling below the ambient temperature with a peak solar irradiation of 900 $W/m^2$. The temperature of the $BaSO_4$ film dropped 10.5°C below the ambient temperature during the nights, and stayed 4.5°C below ambient even at the peak solar irradiation, whereas the simultaneously tested commercial white paint rose 6.8°C above the ambient temperature. A glass substrate was used solely as a supporting substrate for the $BaSO_4$ film, not as a sky window emitter. A direct measurement of the cooling power of the $BaSO_4$ film reached an average of 117 $W/m^2$ over a 24-hour period. Counterintuitively, the cooling power of the $BaSO_4$ film between 10:00 a.m. to 2:00 p.m., despite some solar absorption, was similar to that from 8:00 p.m. to 6:00 a.m., both at around 110 $W/m^2$. This was due to the radiative cooling power being proportional to the fourth power of the surface temperature. As the ambient temperature rose to 35°C at noon, the radiative thermal emission increased by 30% compared with that at 15°C at midnight. Combining a high reflection in the solar spectrum (wavelengths of 0.3 to 3 micrometers), the $BaSO_4$ film was able to maintain a constant high cooling power regardless of the solar irradiation. The cooling performance was close or even higher than designs comprising metallic layers.

FIGS. 5A and 5B schematically represent two on-site cooling setups that were constructed to characterize the cooling performances of the aforementioned experimental $TiO_2$, $CaCO_3$, and $BaSO_4$ composite paints on the roof of a high-rise building. For the first setup in FIG. 5A, a cavity was made from a block of white STYROFOAM®, providing excellent insulation from conduction as well as solar absorption. A thin layer of low-density polyethylene film was used as a shield from forced convection. T-type thermocouples were attached to the base of the sample for temperature measurement and outside the foam for ambient temperature. A pyranometer was secured for solar irradiation measurement. Temperature data and solar irradiance were collected by a datalogger. The second setup in FIG. 5B includes a feedback heater to synchronize the sample temperature with the ambient temperature to reduce the effect of conduction and convection. As the sample was heated to the ambient temperature, the power consumption of the heater was recorded as the cooling power of the sample. Both of the setups were covered by silver MYLAR® to reflect solar absorption and raised to avoid conduction from the ground.

Solar reflectance calibration was performed with a certified Spectralon diffuse reflectance standard for a UV-Vis-NIR spectrometer. Additional calibration was performed with a silicon wafer. Using the silicon wafer as a benchmark, the solar reflectances of the $TiO_2$ composite paint was 89.1%, and the solar reflectances of the $CaCO_3$ composite paint, the $BaSO_4$ film, and the $BaSO_4$ composite paint were 94.9%, 97.1% and 98.0%, respectively, compared to reflectances of 95.5%, 97.6%, and 98.1% using Spectralon diffuse reflectance standard. The reflection of the commercial white paint was 87.2%.

The above-described investigations identified several dielectric single-layer paints for daytime passive radiative cooling. The $TiO_2$ composite paint maintained a partial daytime cooling effect when the solar irradiation was below 600 $W/m^2$. The $CaCO_3$ composite paint with 60% volume concentration exhibited 95.5% solar reflection and full daytime cooling. The $BaSO_4$ composite paint showed 98.1% solar reflection and full daytime cooling with a cooling power of 80 $W/m^2$ over a 24-hour period. With no metallic layers and a scalable single-layer fabrication process, these paints were concluded to have the potential to be applied in a wide variety of applications, such as but not limited to residential and commercial buildings, data centers, antennas, and outdoor housings for telecommunication equipment.

Paints having other microparticle and/or nanoparticle filler materials and/or matrix materials are foreseeable and within the scope of the disclosure. In general, materials are preferably selected on the basis of a relatively large intrinsic band gap in order to reduce absorption in the UV spectrum (e.g., equal to or greater than 3.2 eV). In addition, such paints preferably have particle size ranges that are selected to strongly reflect sunlight other than in the mid-IR spectrum. The vibrational resonances of the particles and polymeric matrices can also have an impact on performance relating to emission in the sky window. Other materials that may be used in the paints for the particles may include, but are not limited to, ZnS, $SiO_2$, $Al_2O_3$, MgO, $YAlO_3$, CaO, $MgAl_2O_4$, and $LaAlO_3$ based on their large electron band gap, and other materials that may be used for the polymer matrices may include, but are not limited to, silicone, polyvinyl alcohol (PVA), polydimethylsiloxane (PDMS), or another polymeric material that is transparent or at least substantially transparent in the visible range to provide high emissivity in the sky window.

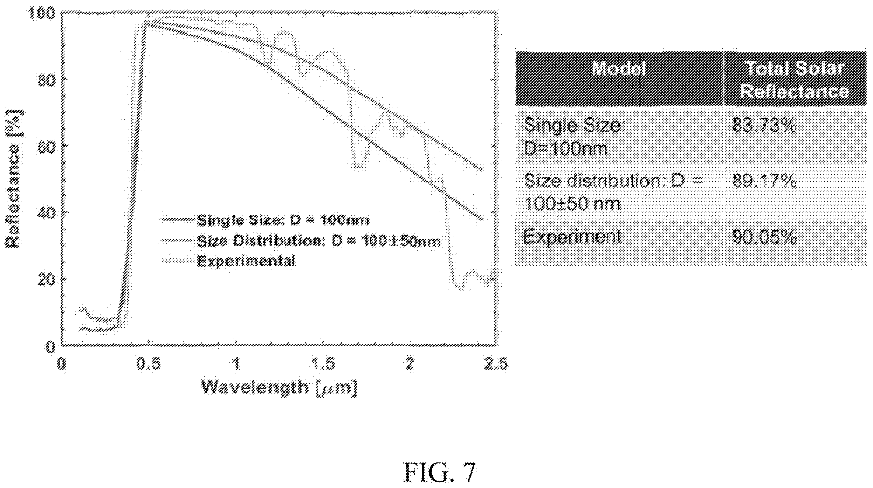

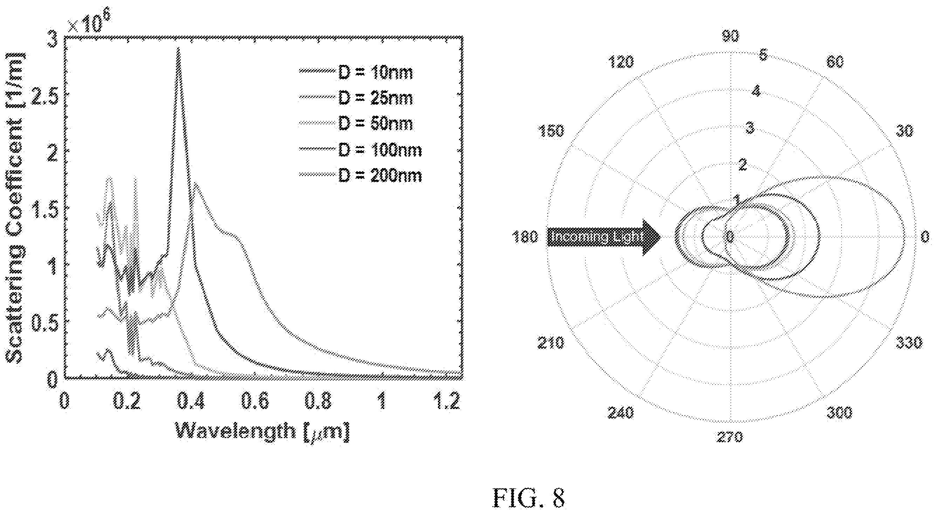

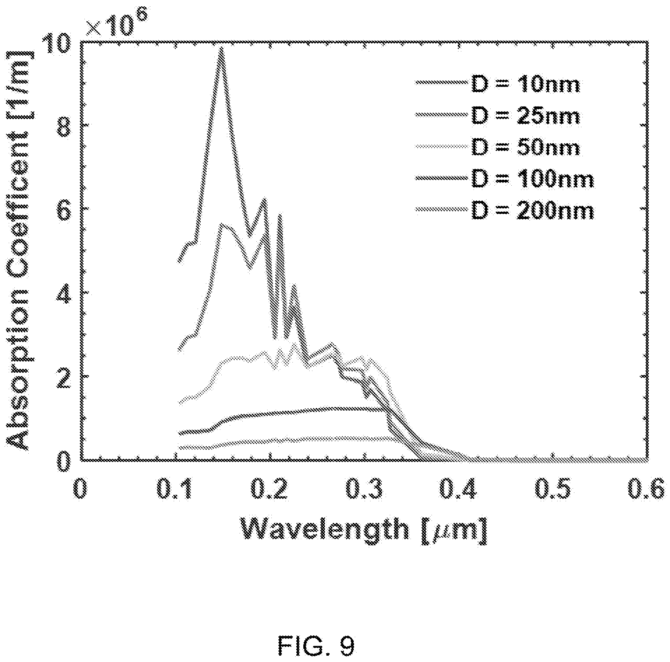

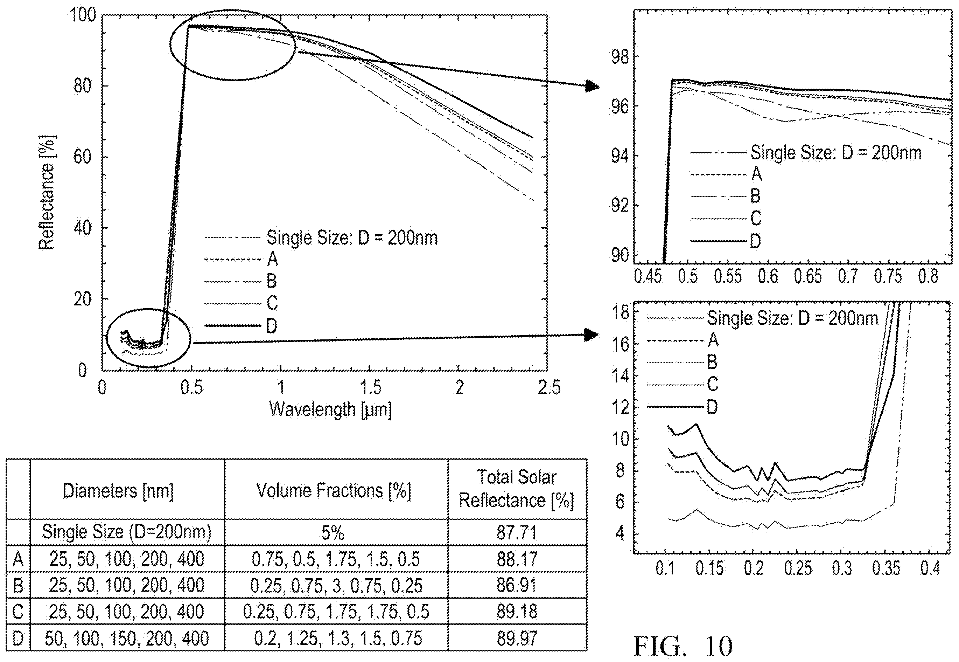

FIGS. 7 through 10 represent data from additional investigations leading to the present disclosure. FIG. 7 represents a comparison between paints having nanoparticles of a single size (D = 100 nm), five random sizes (D = 100 $\pm$50 nm), and the $TiO_2$ composite paint ("Experimental") with a thickness of 2 mm. The measured total solar reflectances of the samples were 83.73% for the single size sample, 89.17% for the random size sample, and 90.05% for the $TiO_2$ composite paint. FIG. 8 represents an effect of particle size on light scattering ($\lambda$ = 412 nm). The scattering coefficient peaks were around 2 to 3 times that of the particle size. Larger nanoparticles (50, 100, and 200 nm) scattered visible light, whereas smaller nanoparticles (10 and 25 nm) scattered UV light and favored backscattering. FIG. 9 represents an effect of particle size on absorption. Relatively large absorption coefficients were measured for 10 and 25 nm nanoparticles, which is believed to outweigh the benefits from scattering. FIG. 10 represents modeling data for multiple particle sizes.

In the literature and in the investigations described above, cooling powers are reported for different locations and weather conditions, making it difficult to fairly assess different materials. In fact, weather conditions can critically affect cooling power. It has been reported that cooling power can be significantly restrained in humid climates compared to dry climates. To address this, a simple "figure of merit" was defined, referred to herein as RC, to help unify the radiative cooling capability of any surface:

$$RC = \epsilon_{Sky} - r\,(1 - R_{Solar}) \qquad (1)$$

where $\epsilon_{Sky}$ is the effective emissivity in the sky window, $R_{Solar}$ is the total reflectance in the solar spectrum, and r is the ratio of the solar irradiation power over the ideal sky window emissive power once the surface temperature is given. r $(1 - R_{Solar})$ represents the amount of the solar irradiation absorbed compared with the ideal sky window emission. RC can be calculated to fairly evaluate different materials at the same solar irradiation and surface temperature. A "standard figure of merit" can also be defined using a standard peak solar irradiation of 1000 W/m$^2$ and a surface temperature of 300K, which yields an ideal sky window emission power of about 140 W/m$^2$ and a standard r of 7.14. An ideal surface with 100% solar reflectance and an emissivity of 1 in the sky window has an RC of 1. The standard figures of merit for the commercial white paint, the $TiO_2$ composite paint, the $CaCO_3$ composite paint, and the $BaSO_4$ composite paint were calculated to be 0.02, 0.18, 0.62, and 0.82, compared to other state-of-the-art approaches calculated to be 0.41, 0.64, 0.44 and 0.68. The $BaSO_4$ composite paint exhibited the highest RC among the reported radiative cooling materials. If the figure of merit is positive, the surface should be able to provide a net cooling effect. Full daytime cooling for the $TiO_2$ composite paint was not observed due to the fact that its small RC was offset by non-ideal weather conditions, such as humidity, which was beyond the scope of the model. With this definition, field tests for future material research on radiative cooling is believed to be unnecessary, since the ideal dry and summer days are only accessible for limited locations and short time windows of a year. On the other hand, systems research of radiative cooling can perform field tests that comprehensively explore the effects of weather.

Additional tests of abrasion resistance, outdoor weathering, and viscosity were also performed as crucial implications for practical applications. During these tests, it was observed that samples of the $CaCO_3$, and $BaSO_4$ composite paints were able to be applied with a brush, dried, and exhibited water resistant similar to commercial paints, such as the commercial white paint used in the investigation. The abrasion tests were performed with a Taber Abraser Research Model according to ASTM D4060. A pair of abrasive wheels (CS-10) with a 250g load per wheel was applied to the paint surfaces. Mass loss was measured every 250 cycles and refacing was done every 500 cycles as required. A wear index (I) was defined as the weight loss in the unit of mg per 1000 cycles according to the following:

$$I = 1000m/C \qquad (2)$$

where m is the weight loss and C is the cycle number. Linear fitted to the mass loss, FIG. 4A shows that the wear indices of the test samples of a commercial white exterior paint, the $CaCO_3$ composite paint, and the $BaSO_4$ composite paint were 104, 84, and 153, respectively. Overall, the $CaCO_3$ and $BaSO_4$ composite paints showed similar abrasion resistance compared to the commercial paint.

Samples of the $CaCO_3$ paint and $BaSO_4$ composite paints were exposed to outdoor weathering including rain and snow for around 3 weeks. FIG. 4B shows that the solar reflectance remained within the uncertainty during the testing period. The sky window emissivity during the test remained at 0.94 and 0.95 for the $CaCO_3$ and $BaSO_4$ composite paints, respectively.

The viscosities of the $CaCO_3$ and $BaSO_4$ composite paints were measured and are compared with water-based and oil-based commercial paints in FIG. 4C. The viscosities of the commercial paints were those reported by others. The $BaSO_4$ composite paint had a similar viscosity to the commercial paints, while the $CaCO_3$ composite paint had a lower viscosity, again indicating the ability to apply both paints with a brush. Viscosity can be further adjusted by changing the type and amount of solvent used.

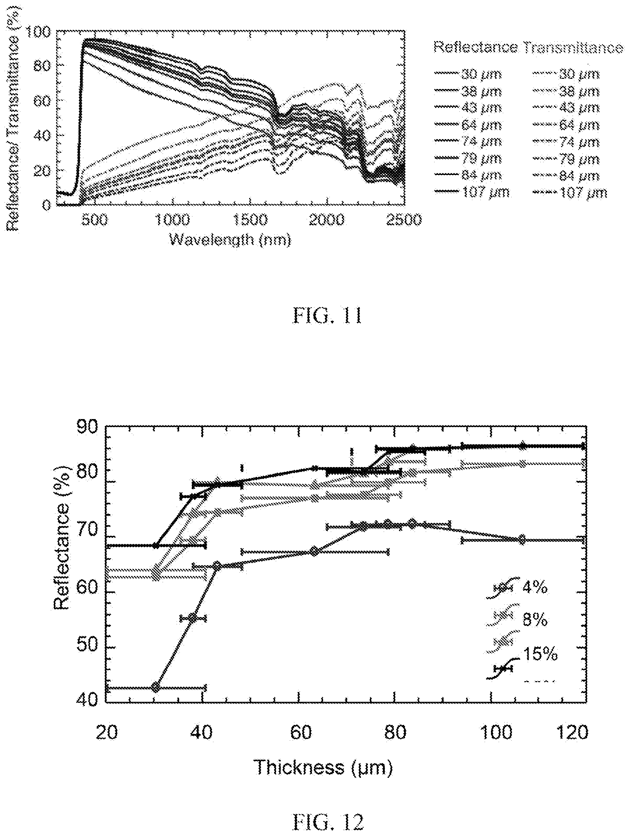

Because the thicknesses of commercial exterior paints are usually less than 300 $\mu$m, the impact of film thickness on the optical properties of the composite paints was studied. FIG. 11 compiles solar reflectance results for films produced with a composite paint containing 8% by volume $TiO_2$ nanoparticles to have thicknesses ranging from 30 $\mu$m to 107 $\mu$m. The composite paint films were deposited on a polyethylene terephthalate (PET) film using a film applicator to control the wet film thickness. The dry film thicknesses were measured with a coordinate measuring machine and a digital indicator. The uncertainties of the thickness were calculated based on the thicknesses measured at various spots of the samples. In the UV spectrum, the films of the $TiO_2$ composite paints shared similar absorptance due to the band gap of $TiO_2$ at 3.2 eV. The optical thickness increased with the film thickness, leading to higher reflectance and lower transmittance. The measurements were repeated for films formed from composite paints having $TiO_2$ nanoparticle volumes of 4%, 15% and 25%, as shown in FIG. 12. With a target reflectance, increasing the filler concentration decreased the required film thickness.

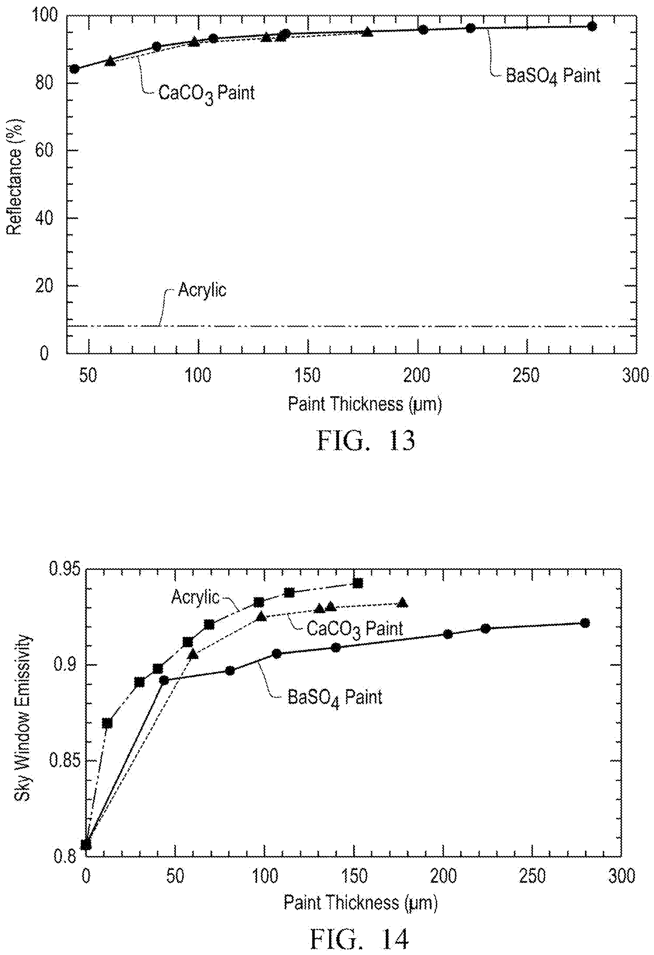

Films of different thicknesses formed from composite paints with 60% by volume concentrations of $CaCO_3$ and $BaSO_4$ were fabricated and evaluated similarly to the $TiO_2$ composite paint films. The solar reflectances and the sky window emissivities are shown in FIGS. 13 and 14. Both paints showed high solar reflectances below 200 $\mu$m (95% and 96% for the $CaCO_3$ and $BaSO_4$ composite paints, respectively), while the sky window emissivities were 0.93 and 0.92, respectively, achieving most of measured cooling performance at a reasonable film thickness. An acrylic film without any particle fillers was also evaluated and found to have a solar reflectance of 7.9 $\pm$ 0.5% (FIG. 13). The PET film supporting the films had an emissivity of 0.81 in the sky window, and the sky window emissivity results of the acrylic film on a PET film are also included in FIG. 14 as a reference.

The solar reflectance and the sky window emissivity of $CaCO_3$ and $BaSO_4$ composite paints containing 60% filler by volume are compared with $CaCO_3$ and $BaSO_4$ composite paints containing lower filler levels in Table 1 below. Sky window emissivity was not sensitive to the filler concentration while the solar reflectance was, especially for the $BaSO_4$ composite paint.

Table 1.

| | Solar Reflectance (%) | Sky Window Emissivity |
|---|---|---|
| 30% $CaCO_3$ paint | 91.1 | 0.95 |
| 60% $CaCO_3$ paint | 95.5 | 0.94 |
| 35% $BaSO_4$ paint | 77.7 | 0.94 |
| 60% $BaSO_4$ paint | 98.1 | 0.95 |

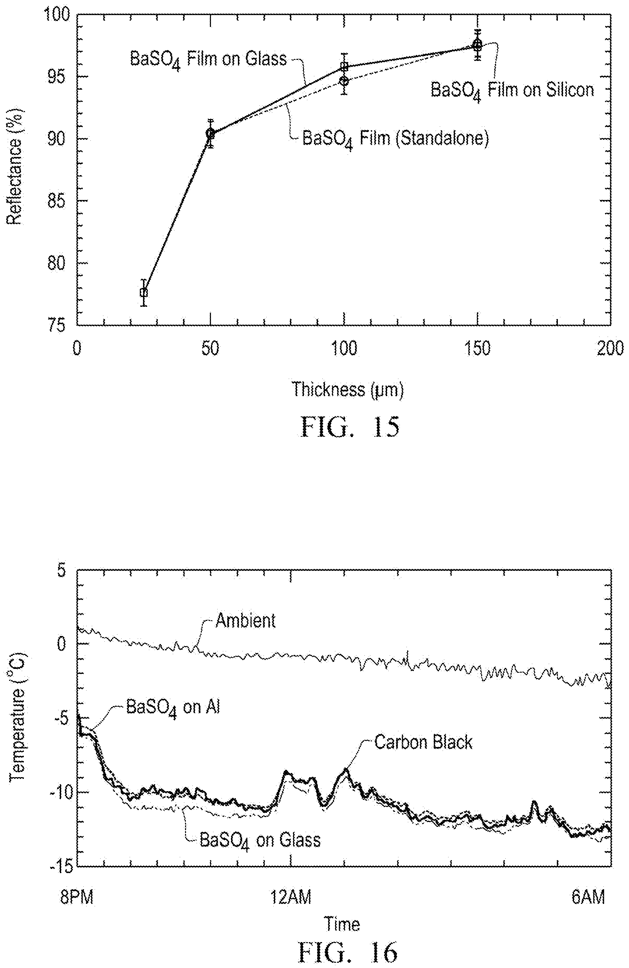

Various thicknesses of matrix-free $BaSO_4$ films according to the present invention were fabricated as standalone films and on different substrates. As indicated in FIG. 15, solar reflectance was independent of the substrate material, indicating a high opacity of the $BaSO_4$ film in the solar spectrum. A $BaSO_4$ film was also prepared on a non-emitting aluminum foil ("Al") and on a glass substrate ("Glass"). As shown in FIG. 16, both samples showed similar cooling performance during the night, close to the previously-noted carbon black sample, among which the differences were within the uncertainties for type-T thermocouples, indicating that both radiation and solar reflectance were contributed by the $BaSO_4$ film alone.

The investigations reported above evidenced that paints containing certain fillers at suitable concentrations and sizes can achieve full daytime below-ambient cooling under direct sunlight with high efficiency and relatively low cost. In these investigations, using fillers of $BaSO_4$ nanoparticles or $CaCO_3$ microparticles at high concentrations, full daytime radiative cooling was achieved with ultra-high efficiency. The large intrinsic band gap of $BaSO_4$ and $CaCO_3$ minimized the absorption in UV, and a high particle concentration of 60%, which is much higher than conventionally used in commercial paints, helped strongly reflect sunlight. In particular, the investigated $BaSO_4$ composite paint exhibited a high solar reflectance of 98.1% and a high sky window emissivity of 0.95, resulting in a high figure of merit (RC) of 0.82 in comparison to that of other reported radiative cooling materials. On the basis of the results reported herein, it was concluded that a particle volume concentration of greater than 10%, more preferably at least 30%, is desirably and likely necessary to achieve acceptable levels of solar reflection and daytime cooling with the composite paints. Additionally, it was concluded that thicknesses of about 50 micrometers to about 2 millimeters are desirable for coatings produced with the composite paints.

While the invention has been described in terms of particular embodiments and investigations, it should be apparent that alternatives could be adopted by one skilled in the art. For example, functions of certain components could be performed by other components capable of a similar (though not necessarily equivalent) function, process parameters could be modified, and appropriate materials could be substituted for those noted. As such, it should be understood that the detailed description is intended to describe the particular embodiments represented herein and certain but not necessarily all features and aspects thereof, and to identify certain but not necessarily all alternatives to the embodiments and their described features and aspects. As a nonlimiting example, the invention encompasses additional or alternative embodiments in which one or more features or aspects of a particular embodiment could be eliminated or two or more features or aspects of different embodiments could be combined. Accordingly, it should be understood that the invention is not necessarily limited to any embodiment described or illustrated herein, and the phraseology and terminology employed above are for the purpose of describing the disclosed embodiments and investigations and do not necessarily serve as limitations to the scope of the invention. Therefore, the scope of the invention is to be limited only by the following claims.

**Claims**

1. A solar-reflective infrared-emissive film comprising nanoparticles that are free of a polymeric matrix, wherein the film does not contain a metallic substituent and when dried on a substrate the film exhibits high reflectance for the solar spectrum wavelengths of 0.3 to 3 micrometers and an emissivity of 0.9 or greater for wavelengths of 8 to 13 micrometers, wherein the nanoparticles are formed of $BaSO_4$.

**2.** The solar-reflective infrared-emissive film according to claim 1, wherein the film is a radiative cooling film.

**3.** The solar-reflective infrared-emissive film according to claim 1, wherein the particles have an electron bandgap of greater than 3.2 eV.

**4.** The solar-reflective infrared-emissive film according to claim 1, wherein the film has a volume concentration of the particles of greater than 10%.

**5.** The solar-reflective infrared-emissive film according to claim 1, wherein the film has a thickness of about 50 micrometers to about 2 mm when dried on the substrate.

**6.** The solar-reflective infrared-emissive film according to claim 1, wherein the film is present on and loses thermal energy from an object exposed to sunlight by reflection of the sunlight and emission via the sky window.

**7.** The solar-reflective infrared-emissive film according to claim 1, wherein the nanoparticles have a particle size of up to 500 nm.

**8.** A method of producing the solar-reflective infrared-emissive film according to any one of claims 1 to 7, the method comprising applying a paint to a substrate with a brush, wherein the paint comprises nanoparticles that are free of a polymeric matrix, wherein the paint does not contain a metallic substituent and wherein the nanoparticles are formed of $BaSO_4$.

**Patentansprüche**

**1.** Ein Sonnenlicht reflektierender, Infrarot emittierender Film, beinhaltend Nanopartikel, die frei von einer Polymermatrix sind, wobei der Film keinen metallischen Substituenten enthält und der Film, wenn er auf einem Substrat getrocknet ist, einen hohen Reflexionsgrad für die Wellenlängen des Sonnenspektrums von 0,3 bis 3 Mikrometer und einen Emissionsgrad von 0,9 oder mehr für Wellenlängen von 8 bis 13 Mikrometer aufzeigt, wobei die Nanopartikel aus $BaSO_4$ gebildet sind.

**2.** Sonnenlicht reflektierender, Infrarot emittierender Film gemäß Anspruch 1, wobei der Film ein Strahlungskühlungsfilm ist.

**3.** Sonnenlicht reflektierender, Infrarot emittierender Film gemäß Anspruch 1, wobei die Partikel eine Elektronenbandlücke von mehr als 3,2 eV aufweisen.

**4.** Sonnenlicht reflektierender, Infrarot emittierender Film gemäß Anspruch 1, wobei der Film eine Volumenkonzentration der Partikel von mehr als 10 % aufweist.

**5.** Sonnenlicht reflektierender, Infrarot emittierender Film gemäß Anspruch 1, wobei der Film eine Dicke von etwa 50 Mikrometer bis etwa 2 mm aufweist, wenn er auf dem Substrat getrocknet ist.

**6.** Sonnenlicht reflektierender, Infrarot emittierender Film gemäß Anspruch 1, wobei der Film auf einem Objekt, das Sonnenlicht ausgesetzt wird, vorhanden ist und durch Reflexion des Sonnenlichts und Emission über das atmosphärische Fenster Wärmeenergie von diesem abgibt.

**7.** Sonnenlicht reflektierender, Infrarot emittierender Film gemäß Anspruch 1, wobei die Nanopartikel eine Partikelgröße von bis zu 500 nm aufweisen.

**8.** Ein Verfahren zum Produzieren des Sonnenlicht reflektierenden, Infrarot emittierenden Films gemäß einem der Ansprüche 1 bis 7, wobei das Verfahren das Auftragen eines Anstrichs auf ein Substrat mit einem Pinsel beinhaltet, wobei der Anstrich Nanopartikel beinhaltet, die frei von einer Polymermatrix sind, wobei der Anstrich keinen metallischen Substituenten enthält und wobei die Nanopartikel aus $BaSO_4$ gebildet sind.

**Revendications**

1. Un film réfléchissant les rayons solaires et émettant dans l'infrarouge comprenant des nanoparticules qui sont dépourvues de matrice polymère, où le film ne contient pas de substituant métallique et, lorsqu'il est amené à sécher sur un substrat, le film présente une réflectance élevée pour les longueurs d'onde du spectre solaire de 0,3 à 3 micromètres et une émissivité de 0,9 ou plus pour des longueurs d'onde de 8 à 13 micromètres, où les nanoparticules sont formées de $BaSO_4$.

2. Le film réfléchissant les rayons solaires et émettant dans l'infrarouge selon la revendication 1, où le film est un film de refroidissement radiatif.

3. Le film réfléchissant les rayons solaires et émettant dans l'infrarouge selon la revendication 1, où les particules ont une bande interdite d'électrons supérieure à 3,2 eV.

4. Le film réfléchissant les rayons solaires et émettant dans l'infrarouge selon la revendication 1, où le film a une concentration volumique des particules supérieure à 10 %.

5. Le film réfléchissant les rayons solaires et émettant dans l'infrarouge selon la revendication 1, où le film a une épaisseur d'environ 50 micromètres à environ 2 mm lorsqu'il est amené à sécher sur le substrat.

6. Le film réfléchissant les rayons solaires et émettant dans l'infrarouge selon la revendication 1, où le film est présent sur un objet exposé à la lumière du soleil et perd de l'énergie thermique à partir de celui-ci par réflexion de la lumière du soleil et émission via la fenêtre atmosphérique.

7. Le film réfléchissant les rayons solaires et émettant dans l'infrarouge selon la revendication 1, où les nanoparticules ont une taille de particule allant jusqu'à 500 nm.

8. Un procédé de production du film réfléchissant les rayons solaires et émettant dans l'infrarouge selon l'une quelconque des revendications 1 à 7, le procédé comprenant l'application d'une peinture sur un substrat avec un pinceau, où la peinture comprend des nanoparticules qui sont dépourvues de matrice polymère, où la peinture ne contient pas de substituant métallique et où les nanoparticules sont formées de $BaSO_4$.

FIG. 1A

FIG. 1B

FIG. 1C

Solar Irradiation 0~3 μm          Sky Window Emission 8~13 μm

Matrix OR Particles

FIG. 2A

—— TiO₂ Paint          —·— BaSO₄ Paint
—·— CaCo₃ Paint          ········ Commercial Paint

FIG. 2B

FIG. 3A

FIG. 3B

FIG. 3C

FIG. 3D

FIG. 3E

FIG. 3F

FIG. 4A

FIG. 4B

FIG. 4C

FIG. 5A

FIG. 5B

EP 3 861 076 B1

FIG. 6

| Model | Total Solar Reflectance |
|---|---|
| Single Size: D=100nm | 83.73% |
| Size distribution: D = 100±50 nm | 89.17% |
| Experiment | 90.05% |

FIG. 7

EP 3 861 076 B1

FIG. 8

FIG. 9

FIG. 10

FIG. 11

FIG. 12

FIG. 13

FIG. 14

FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62740552
- US 62760281

- US 2018244928 A1